# EUROPÄISCHE PATENTSCHRIFT

(11) **EP 4 198 595 B1**
(45) Veröffentlichungstag und Bekanntmachung des Hinweises auf die Patenterteilung: **11.06.2025**
(21) Anmeldenummer: 22214085.7
(22) Anmeldetag: 16.12.2022
(51) Int. Cl.: G02B 6/44

(54) **KABELKANAL MIT ZUMINDEST ZWEI HALTEELEMENTE ZUM HALTEN EINES VERBINDUNGSELEMENTS FÜR EINEN LICHTWELLENLEITER IN DAS KABELKANAL**
CABLE CHANNEL WITH AT LEAST TWO HOLDING ELEMENTS FOR HOLDING A CONNECTING ELEMENT FOR AN OPTICAL WAVEGUIDE IN THE CABLE CHANNEL
CHEMIN DE CÂBLES AVEC AU MOINS DEUX ELÉMENTS DE RETENUE POUR MAINTENIR UN ÉLÉMENT DE CONNEXION POUR UN GUIDE D'ONDES OPTIQUE DANS LE CHEMIN DE CÂBLES

(30) Priorität: 17.12.2021 DE 102021133567
(43) Veröffentlichungstag der Anmeldung: 21.06.2023
(73) Patentinhaber: Algeco GmbH, 77694 Kehl (DE)
(72) Erfinder: Fürstenau, Frank, 49811 Lingen (DE); Lange, Robert, 48429 Rheine (DE)
(74) Vertreter: Schaumburg und Partner Patentanwälte mbB

(56) Entgegenhaltungen:
- US-A1- 2014 341 523
- US-A1- 2020 310 046
- US-B1- 6 671 447

## Beschreibung

Die Erfindung betrifft einen Kabelkanal, der das Halteelement umfasst und eine Anordnung aus zumindest zwei solcher Kabelkanäle.

Containerbauten, auch als Containergebäude bezeichnet, sind Bauten, die einen oder mehrere Container oder Module umfassen. Diese Container sind insbesondere quaderförmig und vorgefertigt und haben normierte Außenmaße. So können die Container nebeneinander und/oder übereinander angeordnet werden, um das Gebäude zu bilden. Dabei können einzelne oder alle Container spezielle Funktionen und Ausstattungen haben, beispielsweise eine Inneneinrichtung mit sanitären Anlagen, Anlagen zur elektronischen Datenverarbeitung, oder Ausstattung für Aufenthalts- oder Büroräume, die dann Räume oder zumindest Teile der Räume des Gebäudes bilden. Allgemein werden Containerbauten nur für eine temporäre Nutzung aufgebaut, beispielsweise eine übergangsweise Nutzung als Bürogebäude, und nach Ende der Nutzung wieder abgebaut. Die Container sowie die Innenausstattung sollen dabei soweit wie möglich wiederbenutzt werden.

Bei jedem Auf- und Abbauen dieser Containerbauten ist es notwendig, eventuell für die Nutzung erforderliche Einbauten oder Inneneinrichtung auf- und abzubauen. Insbesondere das Auf- und Abbauen von Kommunikationsverkabelung, beispielsweise für jeweils interne oder externe Telekommunikation oder Datenverbindungen, ist mit einem erheblichen Aufwand verbunden. Um eine Anbindung der einzelnen Räume an die Kommunikationsverkabelung zu ermöglichen ist eine im Wesentlichen durchgehende Verkabelung der Container notwendig. Gewöhnlich werden für die Verkabelung Kabelkanäle verlegt. Aus dem Dokument EP 2 523 281 B1 sind Kabelkanäle bekannt, die insbesondere in Containerbauten, einfach montiert werden können. Ferner sind aus dem Dokument US 2014/341523 A1 Kabelterminierungseinheiten bekannt, mit denen Verbindungselemente von Lichtwellenleitern an Enden von Kabelkanalsystemen gehalten werden können.

Weiterhin ist eine Anpassung an räumliche Besonderheiten wünschenswert, beispielsweise, um nur in den Räumen Funktionen über die Kommunikationsverkabelung bereitzustellen, in denen sie gebraucht werden. Dies macht über die Verkabelung hinaus eine Anpassung der Kabelkanäle notwendig. Diese individuelle Anpassung erzeugt einen zusätzlichen erheblichen Aufwand.

Es ist Aufgabe der vorliegenden Erfindung, eine Vorrichtung für eine möglichst schnelle und bedarfsgerechte Verlegung von Kommunikationskabeln, insbesondere in Containerbauten anzugeben.

Diese Aufgabe wird durch die Gegenstände der unabhängigen Ansprüche gelöst. Vorteilhafte Weiterbildungen sind in den abhängigen Ansprüchen angegeben.

Ein Kabelkanal umfassend zumindest zwei Halteelemente, wobei die Halteelemente jeweils umfassen:
einen Befestigungsbereich zum Befestigen des Haltelements an einer Fixierschiene des Kabelkanals und einen Aufnahmebereich mit zumindest einer Aufnahmeaussparung zum Aufnehmen des Verbindungselements für den Lichtwellenleiter. Die Aufnahmeaussparung umfasst eine Öffnung zu einem Ende des Aufnahmebereichs. Der Befestigungsbereich umfasst zumindest ein Loch zum Befestigen des Halteelements an der Fixierschiene und ist in einer ersten Ebene angeordnet. Der Aufnahmebereich ist in einer zweiten Ebene angeordnet und die erste Ebene und die zweite Ebene schneiden sich. Darüber hinaus sind ein erstes Ende des Aufnahmebereichs und ein erstes Ende des Befestigungsbereichs verbunden.

Das Verbindungselement kann ein Stecker als Teil einer Steckverbindung sein, insbesondere ein LC-Stecker für Lichtwellenleiter. Das Halteelement kann insbesondere mit einer Schraubverbindung durch das Loch im Befestigungsbereich an der Fixierschiene befestigt werden. So kann mit Hilfe des Halteelements das Verbindungselement mit Lichtwellenleitern einfach in dem Kabelkanal installiert und das Verbindungselement sicher in dem Kabelkanal gehalten werden, wenn der Kabelkanal in einem Container eines Containergebäudes montiert wird.

Vorzugsweise ragt der Aufnahmebereich an der Verbindung zwischen dem Aufnahmebereich und dem Befestigungsbereich nur in einer Richtung über den Befestigungsbereich hinaus. Dies ermöglicht eine besonders einfache Konstruktion und Herstellung des Halteelements.

Besonders bevorzugst ist es, wenn die erste Ebene und die zweite Ebene orthogonal zueinander sind. Dies ermöglicht eine besonders einfache Konstruktion des Halteelements.

In einer bevorzugten Ausführungsform ist die Aufnahmeaussparung, insbesondere die Öffnung der Aufnahmeaussparung, an einem dem ersten Ende des Aufnahmebereichs gegenüberliegenden zweiten Ende des Aufnahmebereichs angeordnet. Somit zeigt die Öffnung weg von dem Befestigungsbereich. Dies ermöglicht ein besonders einfaches Einführen des Verbindungselements in die Aufnahmeaussparung.

Es ist vorteilhaft, wenn der Befestigungsbereich ein zweites Loch zum Befestigen des Halteelements an der Fixierschiene umfasst. Die Löcher sind insbesondere entlang einer Geraden angeordnet, die die Ebene des Aufnahmebereichs schneidet. Das ermöglicht eine besondere sichere, insbesondere eine verdrehsichere, Befestigung des Halteelements an der Fixierschiene.

Es ist besonders vorteilhaft, wenn die Öffnung der Aufnahmeaussparung Nasen umfasst, die jeweils in die Öffnung hineinragen. Insbesondere ist es vorteilhaft, wenn die Öffnung beidseitig Nasen umfasst. Dies verengt die Aufnahmeaussparung an ihrer Öffnung und hält das Verbindungselement besonders sicher in der Aufnahmeaussparung.

Weiterhin ist es vorteilhaft, wenn der Aufnahmebereich zumindest zwei Löcher zum Verbinden des Verbindungselements mit dem Aufnahmebereich umfasst, und jeweils eines der Löcher auf einer Seite neben der Aufnahmeaussparung angeordnet ist. Dies erlaubt die mechanische Verriegelung des Verbindungselements mit Hilfe von Schraubenverbindungen an dem Aufnahmebereich. Dadurch wird das Verbindungselement besonders sicher in der Aufnahmeaussparung gehalten.

Besonders vorteilhaft ist es, wenn der Befestigungsbereich zumindest einen Sicherungsbereich umfasst, der so angeordnet ist, dass mindestens ein aus dem Verbindungselement herausragender Lichtwellenleiter am Sicherungsbereich fixierbar ist, wenn das Verbindungselement in der Aufnahmeaussparung aufgenommen ist. Dies schränkt den Bewegungsspielraum des herausragenden Lichtwellenleiters ein und stabilisiert so das Verbindungselement in der Aufnahmeaussparung.

Es ist vorteilhaft, wenn ein Sicherungselement den Sicherungsbereich und den Lichtwellenleiter an jeweils zumindest einer Seite kontaktiert und den Lichtwellenleiter an den Sicherungsbereich drückt. Das Sicherungselement kann beispielsweise ein Kabelbinder sein. Dies ermöglicht eine besonders sichere Befestigung des Lichtwellenleiters an dem Sicherungsbereich.

Besonders vorteilhaft ist es, wenn die Aufnahmeaussparung so ausgebildet ist, dass das Verbindungselement eine Spielpassung in der Aufnahmeaussparung hat. Die Spielpassung ist insbesondere zwischen den Seiten und den Nasen der Aufnahmeaussparung und dem Verbindungselements, wenn es in der Aufnahmeaussparung angeordnet ist. Dies ermöglicht das einfache Einführen des Verbindungselement in die Aufnahmeaussparung und gleichzeitig einen sicheren Halt in der Aufnahmeaussparung.

Es ist vorteilhaft, wenn das Halteelement aus Metall oder Kunststoff hergestellt ist. Das ermöglicht eine flexible Herstellung des Halteelements.

Es ist besonders vorteilhaft, wenn das Halteelement zumindest zwei Aufnahmeaussparungen umfasst. Dadurch wird erreicht, dass der Kabelkanal mit dem Halteelement besonders effizient zum Verlegen von Lichtwellenleitern genutzt werden kann.

Es ist vorteilhaft, wenn sich die Fixierschiene durch den Kabelkanal von einem Ende des Kabelkanals zu dem anderen Ende des Kabelkanals erstreckt. Dabei erstreckt sich die Fixierschiene insbesondere entlang einer Längsachse des Kabelkanals. Dies ermöglicht die flexible Positionierung des Halteelements entlang der Fixierschiene des Kabelkanals. Die Fixierschiene ist an der Rückseite des Kabelkanals und/oder innerhalb des Kabelkanals angeordnet, insbesondere einstückig im Kabelkanal ausgebildet.

Es ist besonders vorteilhaft, wenn zumindest eine Schraube das Halteelement an der Fixierschiene befestigt und die Schraube durch das erste Loch des Befestigungsbereichs in ein Gewinde eines Gewindeelements eingreift, wobei das Gewindeelement in der Fixierschiene nicht rotierbar, das heißt drehfest, angeordnet ist. Dies ermöglicht eine besonders einfache und sichere Befestigung des Halteelement an der Fixierschiene. Weiterhin ist es vorteilhaft, wenn das Gewindeelement in der Fixierschiene verschiebbar angeordnet. Das ermöglicht eine besonders flexible Positionierung des Halteelements.

Weiterhin ist es vorteilhaft, wenn der Kabelkanal ein Netzwerkgerät zum Anbinden von netzwerkfähigen Geräten an die Lichtwellenleiter umfasst. Das Netzwerkgerät ermöglicht insbesondere das einfache Verbinden von netzwerkfähigen Geräten an ein Netzwerk über die Lichtwellenleiter. Beispielsweise ist das Netzwerkgerät ein Switch. Das Netzwerk kann dabei ein internes Datennetzwerk des Containergebäudes sein, oder ein externes Datennetzwerk, wie beispielsweise das Internet.

Es ist vorteilhaft, wenn zumindest zwei der Lichtwellenleiter zwischen den Verbindungselementen einen trennbaren Steckverbinder umfassen, insbesondere um ein Netzwerkgerät dazwischen zu schalten. Die zwei Lichtwellenleiter sind insbesondere zwei der Lichtwellenleiter, die mit denselben Verbindungselementen verbunden sind. Das Netzwerkgerät kann insbesondere der Switch sein. Dies ermöglicht eine besonders flexible Anpassung des Kabelkanals.

Vorteilhaft ist es, wenn der Kabelkanal zumindest eine Steckdose umfasst, die mit Hilfe eines Stromkabels und einer Steckverbindung mit einem externen Stromnetz verbindbar ist. Das externe Stromnetz kann beispielsweise ein Stromnetz des Containergebäudes sein. Das ermöglicht eine flexible Ausstattung der Container, um einfach elektrische Geräte im Container zu nutzen.

Besonders vorteilhaft ist es, wenn der Kabelkanal einen Spannungswandler umfasst, der an das Stromkabel angeschlossen ist zum Versorgen von elektrischen Komponenten im Kabelkanal. Insbesondere kann das Netzwerkgerät so mit Strom versorgt werden. Dies ermöglicht eine besonders einfache Installation des Kabelkanals und der im Kabelkanal angeordneten Geräte.

Besonders vorteilhaft ist es, wenn der Kabelkanal vier Lichtwellenleiter umfasst. Insbesondere ist jedes Verbindungselement mit zwei Lichtwellenleitern verbunden. Dadurch wird erreicht, dass der Kabelkanal mit dem Halteelement besonders effizient zum Verlegen von Lichtwellenleitern genutzt werden kann.

Ein dritter Aspekt betrifft eine Anordnung von Kabelkanälen zum Ausrüsten von Containerbauten umfassend: zumindest zwei der Kabelkanäle gemäß dem zweiten Aspekt. Die gegenüberliegenden Verbindungselemente an jeweils einem der offenen Enden der Kabelkanäle sind mit Hilfe von zumindest zwei Lichtwellenleitern miteinander verbunden. Die Kombination von mehreren Kabelkanälen mit jeweils individualisierter Ausstattung ermöglicht eine modulare und flexible Ausstattung von Containern von Containerbauten. Die Verbindung der Kabelkanäle untereinander ermöglicht den schnellen Einbau der Kabelkanäle und Herstellung eines Kommunikationsnetzwerks in dem Containergebäude.

Weiterhin ist es vorteilhaft, wenn einer der Kabelkanäle an dem offenen Ende, an dem die Verbindungselemente nicht mit den Verbindungselementen des anderen Kabelkanals verbunden sind, die Verbindungselemente dieses Endes mit Hilfe von zumindest zwei Lichtleitern miteinander verbunden sind. Insbesondere dann, wenn jedes Ende der Kabelkanäle zwei Verbindungselemente und jeder Kabelkanal vier Lichtwellenleiter umfasst. An dem anderen offenen Ende, an dem die Verbindungselemente nicht mit den Verbindungselementen eines anderen Kabelkanals verbunden sind können die Lichtwellenleiter mit einem externen Netzwerk, beispielsweise über einen Netzwerkrouter, verbunden werden. Dies ermöglicht eine ringförmige Netzwerktopologie aufzubauen.

Weitere Merkmale und Vorteile der Erfindung ergeben sich aus den Ansprüchen und der nachfolgenden Beschreibung bevorzugter Ausführungsformen, die anhand der beigefügten Zeichnungen beschrieben werden.

Nachfolgend werden Ausführungsbeispiele anhand der Figuren näher erläutert.

Es zeigen:
- Fig. 1: eine Draufsicht eines Halteelements zum Halten von Verbindungselementen von Lichtwellenleitern,
- Fig. 2: eine Seitenansicht des Halteelements nach Figur 1,
- Fig. 3: eine perspektivische Ansicht des Halteelements in einem Kabelkanal,
- Fig. 4: eine perspektivische Ansicht des Halteelements in dem Kabelkanal mit zwei Verbindungselementen für Lichtwellenleiter,
- Fig. 5: eine schematische Darstellung des Kabelkanals mit zwei der Halteelemente,
- Fig. 6: eine schematische Darstellung eines Kabelkanals nach einem zweiten Ausführungsbeispiel mit einer Stromversorgung,
- Fig. 7: eine schematische Darstellung eines Kabelkanals nach einem dritten Ausführungsbeispiel mit einer Stromversorgung und einem Netzwerkgerät, und
- Fig. 8: eine schematische Darstellung einer Anordnung mit zwei miteinander verbundenen Kabelkanälen.

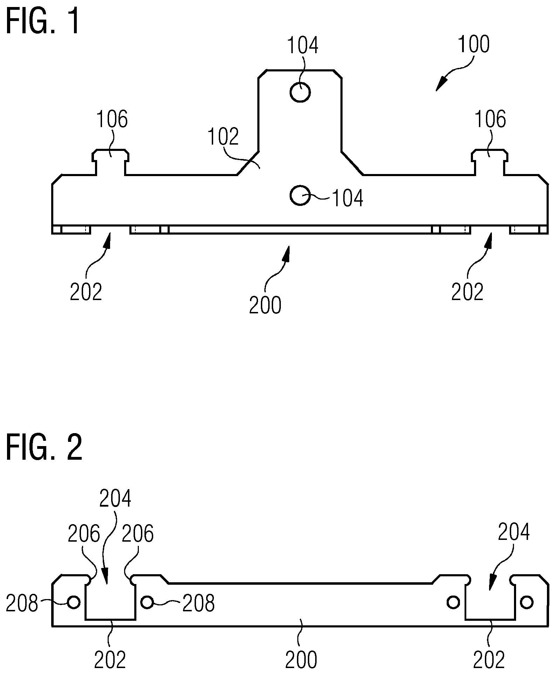

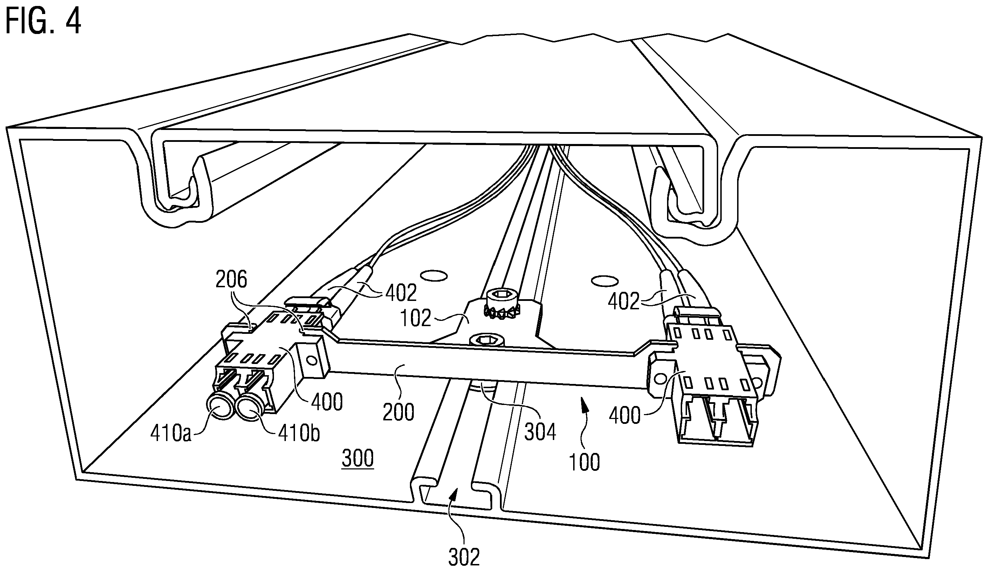

Figur 1 zeigt eine Draufsicht eines Halteelements 100 zum Halten von Verbindungselementen von Lichtwellenleitern. Das Halteelement 100 umfasst einen Befestigungsbereich 102 in einer ersten Ebene. Die erste Ebene erstreckt sich in Figur 1 in der Blattebene. Der Befestigungsbereich 102 umfasst zwei Löcher 104 zum Befestigen des Halteelements. Alternativ kann zumindest ein Loch 104 vorgesehen sein. Weiterhin umfasst der Befestigungsbereich 102 zwei Sicherungsbereiche 106, die im Zusammenhang mit Figur 4 näher erläutert werden. Bei anderen Ausführungsformen kann das Halteelement 100 keine der Sicherungsbereiche 106 umfassen.

Figur 2 zeigt eine Vorderansicht des Halteelements 100. Das Halteelement 100 umfasst weiterhin einen Aufnahmebereich 200. Der Aufnahmebereich 200 ist in einer zweiten Ebene angeordnet, wobei die zweite Ebene orthogonal zur ersten Ebene des Befestigungsbereichs 102 ist. Entlang der Geraden an der sich die erste Ebene mit der zweiten Ebene schneidet, ist ein erstes Ende des Befestigungsbereichs 102 mit einem ersten Ende des Aufnahmebereichs 200 verbunden. An der Verbindung der Bereiche 102, 200 ragt der Aufnahmebereich 200 nur in einer Richtung über den Befestigungsbereich 102 hinaus. Das heißt, dass der Aufnahmebereich 200 im Wesentlichen nur auf einer Seite der ersten Ebene angeordnet ist. Ebenso ist der Befestigungsbereich 102 im Wesentlichen nur auf einer Seite der zweiten Ebene angeordnet.

Der Aufnahmebereich 200 umfasst weiterhin zwei Aufnahmeaussparungen 202. Die Aufnahmeaussparungen 202 können jeweils ein Verbindungselement für einen Lichtwellenleiter aufnehmen. Die Aufnahmeaussparungen 202 sind an einem Ende, insbesondere einem zweiten Ende, des Aufnahmebereichs 200 geöffnet, wobei das zweite Ende gegenüber dem ersten Ende des Aufnahmebereichs 200 liegt. Die Öffnungen 204 der Aufnahmeaussparungen 202 zeigen somit weg vom Befestigungsbereich 102. Die Öffnungen 204 der Aufnahmeaussparungen 202 umfassen Nasen 206, die jeweils von einer Seite in die Öffnung 204 hineinragen und die Öffnung 204 verengen. Weiterhin umfasst der Aufnahmebereich 200 Löcher 208, die jeweils auf einer Seite neben den Aufnahmeaussparungen 202 angeordnet sind. Bei anderen Ausführungsformen kann das Halteelement 100 auch nur eine Aufnahmeaussparung 202 oder mehr als zwei, insbesondere vier Aufnahmeaussparungen 202 umfassen.

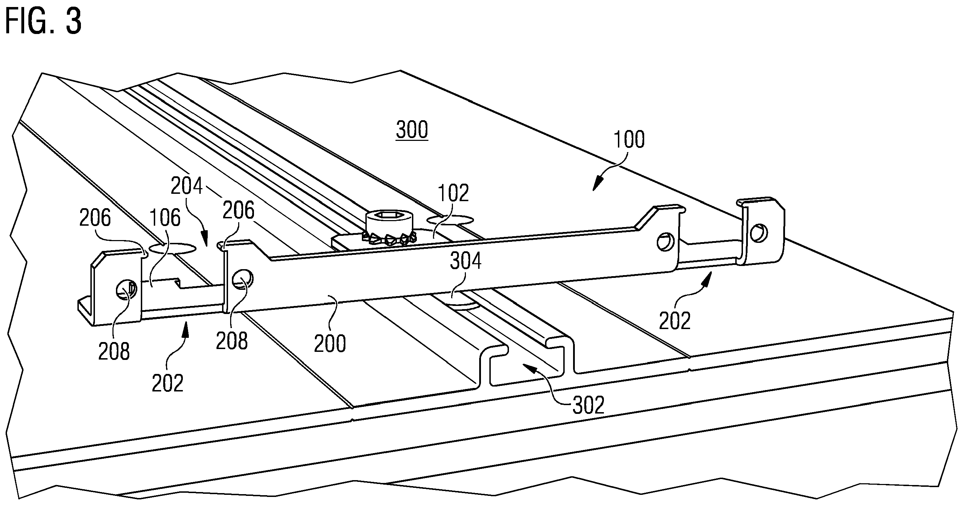

Figur 3 zeigt eine perspektivische Ansicht des Halteelements 100 in einem Kabelkanal 300. Insbesondere ist das Halteelement 100 an einem offenen Ende des Kabelkanals 300 angeordnet. An einem zweiten offenen Ende des Kabelkanals 300 ist ebenso eines der Halteelemente 100 vorgesehen und spiegelbildlich zu dem in Figur 3 gezeigten Halteelement 100 in dem zweiten Ende des Kabelkanals 300 angeordnet. Die Erläuterungen treffen insofern auf beide Halteelemente 100 zu. Das Halteelement 100 ist mit Hilfe der Löcher 104 des Befestigungsbereichs 102 an einer Fixierschiene 302 des Kabelkanals 300 befestigt. Die Fixierschiene 302 ist insbesondere als sogenannte C-Schiene ausgeführt und an der inneren Rückseite des Kabelkanals 300 integral ausgebildet. So kann das Halteelement 100 an der Fixierschiene 302 des Kabelkanals 300 befestigt werden, indem beispielsweise Schrauben durch die Löcher 104 in Gewinde eines Gewindeelements 304 eingreifen, wobei das Gewindeelement 304 in der Fixierschiene 302 nicht rotierbar und vorzugsweise verschiebbar angeordnet ist.

Figur 4 zeigt eine perspektivische Darstellung des Haltelements 100 in dem Kabelkanal 300 mit zwei Verbindungselementen 400 für Lichtwellenleiter 402, die in jeweils einem der Aufnahmeaussparungen 202 des Halteelements 100 gehalten werden. Die Verbindungselemente 400 sind jeweils mit zwei der Lichtwellenleiter 402 verbunden. Zur einfacheren Darstellung sind in den schematischen Figuren zwei Lichtwellenleiter 402 die jeweils zwei Verbindungselemente 400 verbinden als eine Linie dargestellt. Mit Hilfe der Verbindungelemente 400 können die Lichtwellenleiter 402 einfach und reversibel mit weiteren Lichtwellenleitern verbunden werden. Die Verbindungselemente 400 kann beispielsweise Teil einer LC-Steckverbindung sein. Weiterhin ist in Figur 4 eines der Verbindungselemente 400 mit Schutzkappen 410a, 410b dargestellt. Die Schutzkappen 410a, 410b schützen die Endflächen der Lichtwellenleiter 402 in den Verbindungselementen 400 vor Beschädigung, insbesondere während des Transports des Kabelkanals 300.

Um eines der Verbindungselemente 400 in eine der Aufnahmeaussparungen 202 einzuführen, werden zunächst die Lichtwellenleiter 402 des jeweiligen Verbindungselements 400 durch die Öffnung 204 in die entsprechende Aufnahmeaussparung 202 gelegt. Dann wird das Verbindungselement 400 in einer Richtung orthogonal zur Ebene des Aufnahmebereichs 200 in die Aufnahmeaussparung 202 eingeführt. Die Verbindungselemente 400 haben in den Aufnahmeaussparungen 202 insbesondere eine Spielpassung. Das heißt, dass die Aufnahmeaussparungen 202 zumindest so viel größer sind als die Verbindungselemente 400, dass die Verbindungselemente 400 in den Aufnahmeaussparungen 202 Spiel haben, um die Verbindungselemente 400 in die Aufnahmeaussparungen 202 einzuführen. Dabei verhindern die Nasen 206, dass die Verbindungselemente 400 aus den Öffnungen 204 der Aufnahmeaussparungen 202, insbesondere in eine Richtung in der zweiten Ebene, herausbewegt werden können.

Lediglich zusätzlich können die Verbindungselemente 400 können mit Hilfe von Schraubverbindungen und den jeweiligen Löchern 208 in einer der Aufnahmeaussparungen 202 befestigt werden.

Weiterhin lediglich zusätzlich können die Verbindungselemente 400 und/oder die Lichtwellenleiter 402 an dem jeweiligen Sicherungsbereich 106 mit Hilfe eines Sicherungselements befestigt werden. Das Sicherungselement kann beispielsweise ein Kabelbinder sein, der den Sicherungsbereich 106, und die Lichtwellenleiter 402 und/oder das Verbindungselement 400 an jeweils zumindest einer Seite kontaktiert und die Lichtwellenleiter 402 und/oder das Verbindungselement 400 an den Sicherungsbereich 206 drückt. Dies ermöglicht einen besonders sicheren Halt der Verbindungselement 400 in den Halteelementen 100.

Wie bereits erläutert hat der Kabelkanal 300 zwei offene Enden. Eines der Halteelemente 100 ist an jeweils einem der Enden des Kabelkanals 300 angeordnet. Insbesondere sind die Halteelemente 100 in einer Entfernung von den Enden des Kabelkanals 300 in einem Bereich von 0 cm bis 20 cm angeordnet, vorzugsweise in einem Bereich von 5 cm bis 10 cm. Die Halteelemente 100 können an den Enden des Kabelkanals 300 vorzugsweise so angeordnet sein, dass die Verbindungselemente 400 nicht über die Enden des Kabelkanals 300 hinausragen, das heißt, dass die Verbindungselemente 400 nicht aus dem Kabelkanal 300 hervorstehen.

Weiterhin ist es möglich, dass das Halteelement 100 so an der Fixierschiene 302 befestigt ist, dass das Halteelement 100, insbesondere zusammen mit der Schraube und dem Gewindeelement 304, entlang der Fixierschiene 302 verschiebbar ist. Dies ermöglicht beispielsweise bei einer Installation das Halteelement 100 zu verschieben, beispielsweise es näher an die Öffnung an dem Ende des Kabelkanals 300 heranzuziehen, um weitere Lichtwellenleiter einfacher an die Verbindungselemente 400 anzuschließen. Weiterhin kann dadurch eine Beschädigung der Verbindungselemente 400 verhindert werden, beispielsweise, wenn die Verbindungselemente 400 aus einem der Enden des Kabelkanals 300 hinausragen und der Kabelkanal 300 mit diesem Ende auf eine Fläche, wie zum Beispiel den Fußboden, gestellt wird, werden die Verbindungselemente 400 zusammen mit dem Halteelement 100 entlang der Fixierschiene 302 in den Kabelkanal 300 hineingeschoben.

Das Halteelement 100 ist in dem Kabelkanal 300 so angeordnet, dass beide Verbindungselemente 400 im Wesentlichen den gleichen Abstand zum jeweiligen Ende des Kabelkanals 300 haben.

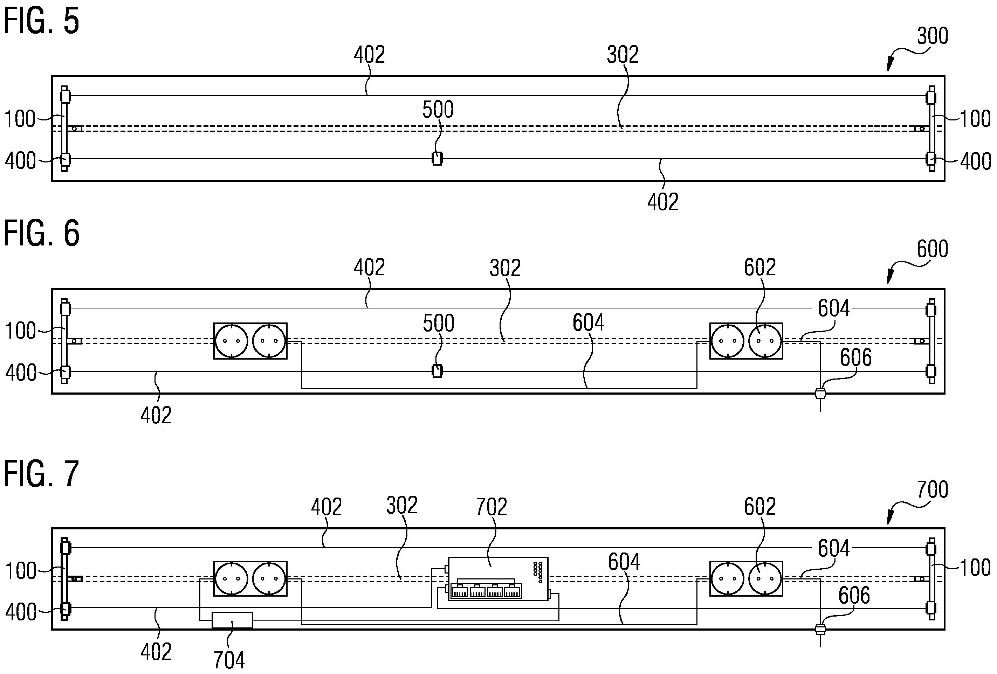

Figur 5 zeigt eine schematische Darstellung des Kabelkanals 300. Der Kabelkanal 300 umfasst zwei Halteelemente 100, die jeweils an einem der Enden des Kabelkanals 300 angeordnet sind. Wie bereits oben beschrieben, sind die Halteelemente 100 an der Fixierschiene 302 befestigt. Weiterhin sind jeweils zwei Verbindungselemente 400 in den Aufnahmeaussparungen 202 des jeweiligen Halteelements 100 angeordnet. Die Verbindungselemente 400 eines der Halteelemente 100 sind jeweils mit zwei Lichtwellenleitern 402 mit dem entsprechenden gegenüberliegenden Verbindungselement 400 des anderen Halteelements 100 verbunden. Weiterhin können zwei der Lichtwellenleiter 402, die zwischen jeweils einem der Verbindungselemente 400 jedes Halteelements 100 verlaufen, durch einen Steckverbinder 500 voneinander trennbar sein. Der Kabelkanal 300 ist weiterhin so konfiguriert, dass er in einem Container eines Containergebäudes installiert werden kann.

Figur 6 zeigt eine schematische Darstellung eines Kabelkanal 600, der zusätzlich zu den Lichtwellenleitern 402 und den in Zusammenhang mit dem Kabelkanal 300 erläuterten Merkmalen eine Stromversorgung umfasst. Die Stromversorgung umfasst mehrere Steckdosen 602, die insbesondere als Schuko-Steckdosen ausgebildet sein können. Die Steckdosen 602 sind über Stromkabel 604 und einen in einer Wand des Kabelkanals 600 angeordneten Steckkontakt 606 mit einer externen Stromversorgung verbindbar. Der Steckkontakt 606 kann beispielsweise als GST18 Steckverbindung ausgeführt sein. Die externe Stromversorgung ist insbesondere eine Stromversorgung, die in Containern vorhanden ist, in die der Kabelkanal 600 eingebaut werden kann.

Figur 7 zeigt eine schematische Darstellung eines Kabelkanals 700, der die bereits beschriebenen Lichtwellenleiter 402 und die in Zusammenhang mit dem Kabelkanal 300, 600 erläuterten Merkmalen umfasst. Zusätzlich umfasst der Kabelkanal 700 ein Netzwerkgerät 702, das an der Steckverbinder 500 in zwei der Lichtwellenleiter 402 eingeschleift ist. Weiterhin kann das Netzwerkgerät 702 an die Stromversorgung angeschlossen sein, beispielsweise über ein Netzteil 704, das als Spannungswandler dient und insbesondere 48 V für das Netzwerkgerät 702 bereitstellt. Das Netzwerkgerät 702 ermöglich das Verbinden von netzwerkfähigen Geräten an ein Netzwerk über die Lichtwellenleiter 402. Beispielsweise können die netzwerkfähigen Geräte mit Hilfe von Ethernet-Kabeln an das Netzwerkgerät 702 angeschlossen werden und so über die Lichtwellenleiter 402 mit dem Netzwerk kommunizieren. Das Netzwerkgerät 702 wird auch als Switch bezeichnet.

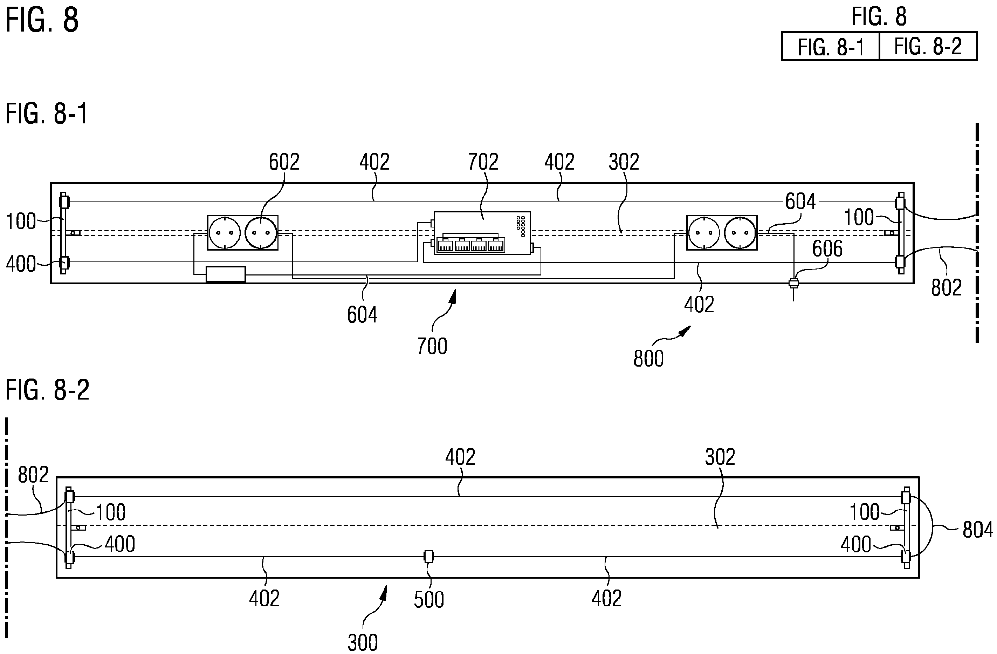

Figur 8 zeigt eine schematische Darstellung einer Anordnung 800 zum Ausrüsten von Containerbauten umfassend den Kabelkanal 300 und den Kabelkanal 700. Die Kabelkanäle 300, 700 sind miteinander mit Hilfe von Lichtwellenleitern 802 verbunden. Jeweils zwei Lichtwellenleiter 802 verbinden dabei gegenüberliegende Verbindungselemente 400 der Kabelkanäle 300, 700. Weiterhin sind die Verbindungselemente 400 am anderen Ende des Kabelkanals 300 mit Hilfe von Lichtwellenleitern 804 miteinander verbunden. An einem Ende 806 des Kabelkanals 700 können die Lichtwellenleiter 402 des Kabelkanals 700 an ein Netzwerk angeschlossen werden.

Alternativ oder zusätzlich kann an dem Ende des Kabelkanals 300 anstelle des Lichtwellenleiters 804 ein oder mehrere weitere Kabelkanäle 300, 600, 700 mit dem Kabelkanal 300 verbunden sein. Diese Verbindung kann insbesondere mit Hilfe von Lichtwellenleitern 802 so ausgeführt sein wie die Verbindung zwischen dem Kabelkanal 700 und 300.

So ist es möglich, eine Kette von Kabelkanälen 300, 700, 600 zu bilden. Die Reihenfolge bzw. Anordnung der Kabelkanäle 300, 600, 700 ist dabei insbesondere auf Bedürfnisse vor Ort abzustimmen. Die Kabelkanäle 300, 600, 700 sind insbesondere dafür geeignet, in Containerbauten eingebaut zu werden. Dabei haben die einzelnen Kabelkanäle 300, 600, 700 vorbestimmte Maße, die es ermöglichen die Kabelkanäle 300, 600, 700 an vorbestimmte Positionen in den Containerbauten anzubringen. An den Positionen, an denen in den Containerbauten Wände oder andere strukturelle Elemente der Containerbauten zu überwinden sind, ist eine Überbrückung zwischen einzelnen Kabelkanälen 300, 600, 700 mit Hilfe von Lichtwellenleitern 802 vorgesehen. So können einzelne Räume der Containerbauten mit Hilfe der individuellen zusammenstellbaren Anordnung von Kabelkanälen 300, 600, 700 mit den jeweils notwendigen Funktionen ausgerüstet werden. Beispielsweise können Büroräume mit Kabelkanälen 700 ausgerüstet werden, um Strom über die Steckdosen 602 zur Verfügung zu stellen sowie Netzwerkanschlüsse über die Netzwerkgeräte 702 zur Verfügung zu stellen. Andere Räume, die beispielsweise Aufenthaltsräume, die keine weiteren technischen Ausrüstung benötigen, können mit Kabelkanälen 300 ausgerüstet werden. Hierdurch werden die Kabelkanäle 300, 600, 700 in Form einer Kette, das heißt verkettet angeordnet. Durch die Verkettung der einzelnen Kabelkanäle 300, 600, 700 wird eine besonders schnelle und effiziente Ausrüstung der Containerbauten ermöglicht. Insbesondere ist es möglich Netzwerkanschlüssen über die Netzwerkgeräte 702 an jeder Position in der Kette von Kabelkanälen 300, 600, 700, ermöglicht. Insbesondere ist dadurch möglich, mit standardisierten Elementen in Form der Kabelkanäle 300, 600, 700, Containerbauten individuell auszurüsten.

### Bezugszeichenliste

- 100: Halteelement
- 102: Befestigungsbereich
- 104: Loch zum Befestigen im Befestigungsbereich
- 106: Sicherungsbereich
- 200: Aufnahmebereich
- 202: Aufnahmeaussparung
- 204: Öffnung der Aufnahmeaussparung
- 206: Nase
- 208: Loch zum Befestigen im Aufnahmebereich
- 300, 600, 700: Kabelkanal
- 302: Fixierschiene / C-Schiene
- 304: Gewindeelement
- 400: Verbindungselement
- 402, 802, 804: Lichtwellenleiter
- 410a, 410b: Schutzkappe
- 500: Steckverbinder
- 602: Steckdose
- 604: Stromkabel
- 606: Steckkontakt
- 702: Netzwerkgerät
- 704: Netzteil
- 800: Anordnung von Kabelkanälen für Containerbauten

## Patentansprüche

1. Kabelkanal (300, 600, 700) zum Ausrüsten von Containerbauten umfassend:
zumindest zwei Halteelemente (100), wobei die Halteelemente (100) jeweils umfassen: einen Befestigungsbereich (102) zum Befestigen des Haltelements (100) an einer Fixierschiene (302) des Kabelkanals (300, 600, 700),
einen Aufnahmebereich (200) mit zumindest einer Aufnahmeaussparung (202) zum Aufnehmen des Verbindungselements (400) für den Lichtwellenleiter (402), wobei der Befestigungsbereich (102) zumindest ein Loch (104) zum Befestigen des Halteelements (100) an der Fixierschiene (302) hat,
wobei der Befestigungsbereich (102) in einer ersten Ebene angeordnet ist und der Aufnahmebereich (200) in einer zweiten Ebene angeordnet ist und die erste Ebene und die zweite Ebene sich schneiden, und
wobei ein erstes Ende des Aufnahmebereichs (200) und ein erstes Ende des Befestigungsbereichs (102) verbunden sind,
wobei der Kabelkanal weiterhin umfasst:
eine C-förmige Fixierschiene (302) derart ausgebildet, dass das Halteelement (100) an der Fixierschiene (302) fixierbar ist,
zumindest zwei Lichtwellenleiter (402), die nebeneinander entlang des Kabelkanals (300, 600, 700) angeordnet sind und die an ihren Enden jeweils paarweise mit einem Verbindungselement (400) verbunden sind,
wobei der Kabelkanal (300, 600, 700) zwei offene Enden hat, und
wobei jeweils eines der Verbindungselemente (400) der Lichtwellenleiter (402) in einer der Aufnahmeaussparungen (202) von an gegenüberliegenden Enden des Kabelkanals (300, 600, 700) angeordneten Halteelementen (100) gehalten wird,
**dadurch gekennzeichnet, dass**
die Aufnahmeaussparungen (202) jeweils eine Öffnung (204) zu einem Ende des Aufnahmebereichs (200) haben, und
jeweils eines der Halteelemente (100) in einer Entfernung in einem Bereich von 5 cm bis 20 cm von einem der Enden des Kabelkanals (300, 600, 700) angeordnet ist.

2. Kabelkanal nach Anspruch 1, wobei der Aufnahmebereich (200) an der Verbindung zwischen dem Aufnahmebereich (400) und dem Befestigungsbereich (102) nur in einer Richtung über den Befestigungsbereich (102) hinausragt.

3. Kabelkanal nach einem der vorhergehenden Ansprüche, wobei die Aufnahmeaussparung (202) an einem dem ersten Ende des Aufnahmebereichs (200) gegenüberliegenden zweiten Ende des Aufnahmebereichs (200) angeordnet ist und/oder die Aufnahmeaussparung (202) so ausgebildet ist, dass das Verbindungselement (400) eine Spielpassung in der Aufnahmeaussparung (202) hat.

4. Kabelkanal nach einem der vorhergehenden Ansprüche, wobei die Öffnung (204) der Aufnahmeaussparung (202) Nasen (206) umfasst, die jeweils in die Öffnung (204) hineinragen.

5. Kabelkanal nach einem der vorhergehenden Ansprüche, wobei der Aufnahmebereich (200) zumindest zwei Löcher (208) zum Verbinden des Verbindungselements (400) mit dem Aufnahmebereich (200) umfasst, und jeweils eines der Löcher (208) auf einer Seite neben der Aufnahmeaussparung (202) angeordnet ist.

6. Kabelkanal nach einem der vorhergehenden Ansprüche, wobei der Befestigungsbereich (102) zumindest einen Sicherungsbereich (106) umfasst, der so angeordnet ist, dass mindestens ein aus dem Verbindungselement (400) herausragender Lichtwellenleiter (402) am Sicherungsbereich (106) fixierbar ist, wenn das Verbindungselement (400) in der Aufnahmeaussparung (202) aufgenommen ist.

7. Kabelkanal nach Anspruch 6, wobei ein Sicherungselement den Sicherungsbereich (106) und den Lichtwellenleiter (402) an jeweils zumindest einer Seite kontaktiert und den Lichtwellenleiter (402) an den Sicherungsbereich (206) drückt.

8. Kabelkanal nach einem der vorhergehenden Ansprüche, wobei zumindest eine Schraube das Halteelement (100) an der Fixierschiene (302) befestigt und die Schraube durch das erste Loch (104) des Befestigungsbereichs (102) in ein Gewinde eines Gewindeelements (304) eingreift, wobei das Gewindeelement (304) in der Fixierschiene (302) nicht rotierbar angeordnet ist.

9. Kabelkanal nach einem der vorhergehenden Ansprüche, umfassend ein Netzwerkgerät (702) zum Anbinden von netzwerkfähigen Geräten an die Lichtwellenleiter (402).

10. Kabelkanal nach einem der vorhergehenden Ansprüche, wobei zumindest die zwei der Lichtwellenleiter (402) zwischen den Verbindungselementen (400) einen trennbaren Steckverbinder (500) umfassen, insbesondere um ein Netzwerkgerät (702) dazwischen zu schalten.

11. Kabelkanal nach einem der vorhergehenden Ansprüche, umfassend zumindest eine Steckdose (602), die mit Hilfe eines Stromkabels (604) und einer Steckverbindung (606) mit einem externen Stromnetz verbindbar ist.

12. Kabelkanal nach Anspruch 11, umfassend einen Spannungswandler (704) angeschlossen an das Stromkabel (604) zum Versorgen von elektrischen Komponenten des Kabelkanals (300, 600, 700), insbesondere des Netzwerkgeräts (702).

13. Anordnung (800) von Kabelkanälen zum Ausrüsten von Containerbauten umfassend:
zumindest zwei Kabelkanäle (300, 600, 700) nach einem der vorhergehenden Ansprüche, und
wobei die Verbindungselemente (400) jeweils eines der offenen Enden eines der Kabelkanäle (300, 600, 700) mit Hilfe von zumindest zwei Lichtwellenleitern (402) mit den jeweiligen Verbindungselementen eines der offenen Enden des anderen Kabelkanals (300, 600, 700) verbunden sind.

14. Anordnung nach Anspruch 13, wobei einer der Kabelkanäle (300, 600, 700) an dem offenen Ende, an dem die Verbindungselemente (400) nicht mit den Verbindungselementen (400) des anderen Kabelkanals (300, 600, 700) verbunden sind, die Verbindungselemente dieses Endes mit Hilfe von zumindest zwei Lichtleitern miteinander verbunden sind.

## Claims

1. Cable duct (300, 600, 700) for equipping container structures, comprising:
at least two holding elements (100), wherein the holding elements (100) each comprise: a fastening region (102) for fastening the holding element (100) to a fixing rail (302) of the cable duct (300, 600, 700),
a receiving region (200) with at least one receiving recess (202) for receiving the connecting element (400) for the optical waveguide (402), wherein the fastening region (102) has at least one hole (104) for fastening the holding element (100) to the fixing rail (302),
wherein the fastening region (102) is arranged in a first plane and the receiving region (200) is arranged in a second plane and the first plane and the second plane intersect, and
wherein a first end of the receiving region (200) and a first end of the fastening region (102) are connected,
wherein the cable duct further comprises:
a C-shaped fixing rail (302) formed in such a way that the holding element (100) can be fixed to the fixing rail (302),
at least two optical waveguides (402) which are arranged next to each other along the cable duct (300, 600, 700) and are connected at their ends in pairs to a connecting element (400),
wherein the cable duct (300, 600, 700) has two open ends, and
wherein in each case one of the connecting elements (400) of the optical waveguides (402) is held in one of the receiving recesses (202) of holding elements (100) arranged at opposite ends of the cable duct (300, 600, 700),
**characterized in that**
the receiving recesses (202) each have an opening (204) at one end of the receiving region (200), and
in each case one of the holding elements (100) is arranged at a distance in a range of from 5 cm to 20 cm from one of the ends of the cable duct (300, 600, 700).

2. Cable duct according to Claim 1, wherein the receiving region (200) projects beyond the fastening region (102) only in one direction at the connection between the receiving region (400) and the fastening region (102).

3. Cable duct according to either of the preceding claims, wherein the receiving recess (202) is arranged at a second end of the receiving region (200) opposite the first end of the receiving region (200) and/or the receiving recess (202) is designed such that the connecting element (400) has a clearance fit in the receiving recess (202).

4. Cable duct according to any of the preceding claims, wherein the opening (204) in the receiving recess (202) comprises lugs (206) which each project into the opening (204).

5. Cable duct according to any of the preceding claims, wherein the receiving region (200) comprises at least two holes (208) for connecting the connecting element (400) to the receiving region (200), and in each case one of the holes (208) is arranged on a side next to the receiving recess (202).

6. Cable duct according to any of the preceding claims, wherein the fastening region (102) comprises at least one securing region (106), which is arranged such that at least one optical waveguide (402) projecting from the connecting element (400) can be fixed to the securing region (106) when the connecting element (400) is received in the receiving recess (202).

7. Cable duct according to Claim 6, wherein a securing element contacts the securing region (106) and the optical waveguide (402) on in each case at least one side and presses the optical waveguide (402) against the securing region (206).

8. Cable duct according to any of the preceding claims, wherein at least one screw fastens the holding element (100) to the fixing rail (302) and the screw engages into a thread of a threaded element (304) through the first hole (104) in the fastening region (102), wherein the threaded element (304) is arranged in the fixing rail (302) in a non-rotatable manner.

9. Cable duct according to any of the preceding claims, comprising a network device (702) for connecting network-compatible devices to the optical waveguides (402).

10. Cable duct according to any of the preceding claims, wherein at least the two of the optical waveguides (402) between the connecting elements (400) comprise a separable plug-in connector (500), in particular in order to connect a network device (702) therebetween.

11. Cable duct according to any of the preceding claims, comprising at least one socket (602), which can be connected to an external power supply system by means of a power cable (604) and a plug-in connection (606).

12. Cable duct according to Claim 11, comprising a voltage transformer (704) connected to the power cable (604) for supplying power to electrical components of the cable duct (300, 600, 700), in particular the network device (702).

13. Arrangement (800) of cable ducts for equipping container structures, comprising:
at least two cable ducts (300, 600, 700) according to any of the preceding claims, and
wherein the connecting elements (400) of in each case one of the open ends of one of the cable ducts (300, 600, 700) are connected by means of at least two optical waveguides (402) to the respective connecting elements of one of the open ends of the other cable duct (300, 600, 700).

14. Arrangement according to Claim 13, wherein one of the cable ducts (300, 600, 700) at the open end, at which the connecting elements (400) are not connected to the connecting elements (400) of the other cable duct (300, 600, 700), the connecting elements of this end are connected to each other by means of at least two light guides.

## Revendications

1. Chemin de câbles (300, 600, 700) destiné à équiper des constructions de containers, comprenant :
au moins deux éléments de retenue (100), les éléments de retenue (100) comprenant chacun : une zone de fixation (102) pour fixer l'élément de retenue (100) à un rail de fixation (302) du chemin de câbles (300, 600, 700),
une zone de réception (200) avec au moins un évidement de réception (202) pour recevoir l'élément de connexion (400) pour la fibre optique (402), la zone de fixation (102) présentant au moins un trou (104) pour fixer l'élément de retenue (100) au rail de fixation (302),
la zone de fixation (102) étant agencée dans un premier plan et la zone de réception (200) étant agencée dans un deuxième plan, et le premier plan et le deuxième plan se coupant, et
une première extrémité de la zone de réception (200) et une première extrémité de la zone de fixation (102) étant reliées,
le chemin de câbles comprenant en outre :
un rail de fixation (302) en forme de C, conçu de telle sorte que l'élément de retenue (100) puisse être fixé sur le rail de fixation (302),
au moins deux fibres optiques (402) qui sont agencées côte à côte le long du chemin de câbles (300, 600, 700) et qui sont chacune connectées à leurs extrémités par paires à un élément de connexion (400),
le chemin de câbles (300, 600, 700) ayant deux extrémités ouvertes, et
chacun des éléments de connexion (400) des fibres optiques (402) étant maintenu dans l'un des évidements de réception (202) par des éléments de retenue (100) agencés aux extrémités opposées du chemin de câbles (300, 600, 700),
**caractérisé en ce que**
les évidements de réception (202) présentent chacun une ouverture (204) vers une extrémité de la zone de réception (200), et
chacun des éléments de retenue (100) est agencé à une distance comprise entre 5cm et 20cm de l'une des extrémités du chemin de câbles (300, 600, 700).

2. Chemin de câbles selon la revendication 1, dans lequel la zone de réception (200) ne dépasse de la zone de fixation (102) que dans une direction au niveau de la jonction entre la zone de réception (400) et la zone de fixation (102).

3. Chemin de câbles selon l'une des revendications précédentes, dans lequel l'évidement de réception (202) est agencé sur une deuxième extrémité de la zone de réception (200) opposée à la première extrémité de la zone de réception (200) et/ou l'évidement de réception (202) est conçu de telle sorte que l'élément de connexion (400) a un ajustement avec jeu dans l'évidement de réception (202).

4. Chemin de câbles selon l'une des revendications précédentes, l'ouverture (204) de l'évidement de réception (202) comprenant des ergots (206) qui font saillie respectivement dans l'ouverture (204).

5. Chemin de câbles selon l'une des revendications précédentes, dans lequel la zone de réception (200) comprend au moins deux trous (208) pour connecter l'élément de connexion (400) à la zone de réception (200), et chacun des trous (208) est agencé sur un côté adjacent à l'évidement de réception (202).

6. Chemin de câbles selon l'une des revendications précédentes, dans lequel la zone de fixation (102) comprend au moins une zone de fixation (106) qui est agencée de telle sorte qu'au moins une fibre optique (402) faisant saillie hors de l'élément de liaison (400) est apte à être fixée sur la zone de fixation (106) lorsque l'élément de connexion (400) est logé dans l'évidement de réception (202).

7. Chemin de câbles selon la revendication 6, dans lequel un élément de fixation est en contact avec la zone de fixation (106) et la fibre optique (402) sur au moins un côté, et presse la fibre optique (402) contre la zone de fixation (206).

8. Chemin de câbles selon l'une des revendications précédentes, dans lequel au moins une vis fixe l'élément de retenue (100) sur le rail de fixation (302) et la vis s'engage à travers le premier trou (104) de la zone de fixation (102) dans un filetage d'un élément fileté (304), l'élément fileté (304) étant agencé de manière non rotative dans le rail de fixation (302).

9. Chemin de câbles selon l'une des revendications précédentes, comprenant un dispositif réseau (702) pour connecter des appareils compatibles réseau aux fibres optiques (402).

10. Chemin de câbles selon l'une des revendications précédentes, dans lequel au moins deux des fibres optiques (402) comprennent entre les éléments de connexion (400) un connecteur enfichable séparable (500), en particulier pour connecter un appareil réseau (702) entre elles.

11. Chemin de câbles selon l'une des revendications précédentes, comprenant au moins une prise à fiches (602) qui est raccordable à un réseau électrique externe à l'aide d'un câble électrique (604) et d'une connexion enfichable (606).

12. Chemin de câbles selon la revendication 11, comprenant un convertisseur de tension (704) raccordé au câble électrique (604) pour alimenter des composants électriques du chemin de câbles (300, 600, 700), en particulier le dispositif de réseau (702).

13. Agencement (800) de chemins de câbles pour équiper des constructions de conteneurs, comprenant :
au moins deux chemins de câbles (300, 600, 700) selon l'une des revendications précédentes, et
dans lequel les éléments de connexion (400) relient chacune des extrémités ouvertes de l'un des chemins de câbles (300, 600, 700) à l'aide d'au moins deux fibre optiques (402) aux éléments de connexion respectifs de l'une des extrémités ouvertes de l'autre chemin de câbles (300, 600, 700).

14. Agencement selon la revendication 13, dans lequel l'un des chemins de câbles (300, 600, 700) l'extrémité ouverte, à laquelle les éléments de liaison (400) ne sont pas connectés aux éléments de connexion (400) de l'autre chemin de câbles (300, 600, 700), les éléments de connexion de cette extrémité sont reliés entre eux à l'aide d'au moins deux fibres optiques.
